# EUROPÄISCHE PATENTSCHRIFT

(11) **EP 0 550 813 B1**
(45) Veröffentlichungstag und Bekanntmachung des Hinweises auf die Patenterteilung: **12.02.1997**
(21) Anmeldenummer: 92119104.5
(22) Anmeldetag: 07.11.1992
(51) Int. Cl.: F16L 21/00, F16L 55/175, F16L 55/172

(54) **Rohrkupplung**
Pipe coupling
Raccord de tuyaux

(30) Priorität: 07.01.1992 CH 15/92
(43) Veröffentlichungstag der Anmeldung: 14.07.1993
(73) Patentinhaber: STRAUB FEDERNFABRIK AG, CH-7323 Wangs (CH)
(72) Erfinder: Straub, Immanuel, CH-7323 Wangs (CH)
(74) Vertreter: Patentanwälte Schaad, Balass, Menzl & Partner AG

(56) Entgegenhaltungen:
- EP-A- 0 079 457
- DE-U- 8 512 007
- GB-A- 573 695
- GB-A- 573 696
- GB-A- 573 698

## Beschreibung

Die vorliegende Erfindung betrifft eine Rohrkupplung gemäss Oberbegriff des Anspruches 1.

Aus der DE-A-24 28 101 (bzw. der entsprechenden US-A-3,877,733) sowie der EP-A-0 447 955 (bzw. der entsprechenden US-A-5,137,305) sind Rohrkupplungen dieser Art bekannt, bei denen die Spannvorrichtung für das Gehäuse zwei zueinander parallele Gewindebolzen aufweist, die sich durch zwei zylindrische Spannbolzen hindurch erstrecken. Letztere verlaufen in Spannlaschen, die beidseits des durch eine Einlage überbrückten Gehäusespaltes am Gehäuse angebracht und mit Durchgangslöchern versehen sind, in deren Innengewinde die Gewindebolzen eingeschraubt sind. Die zylindrischen, mit einem Innensechskant versehenen Köpfe der Gewindebolzen kommen an einem Spannbolzen zur Auflage.

Zum Zusammenziehen des Gehäuses, das ja das Andrücken der Dichtungsmanschette an die Rohrenden bewirkt, sind grosse Spannkräfte erforderlich. Zudem müssen bei der Montage der Rohrkupplung die Spannbolzen und damit auch die Spannlaschen einen verhältnismässig langen Weg aufeinander zu zurücklegen. Das hat zur Folge, dass über die Spannbolzen auf die in letztere eingeschraubten Gewindebolzen ganz erhebliche Biegekräfte übertragen werden, die zu einer Biegung der Gewindebolzen führen können. Beim Spannen treten dann nicht mehr nur in Umfangsrichtung des Gehäuses verlaufende Spannkräfte auf, sondern auch in radialer Richtung wirkende Kräfte, die ein einwandfreies Zusammenziehen des Gehäuses und damit ein gleichmässiges Anlegen der Dichtungsmanschette an die Rohrenden störend beeinflussen.

In der DE-U-85 12 007 ist eine Rohrbruchschelle beschrieben, mit der eine die undichte Stelle einer Rohrleitung umfassende Dichtung dichtend an die Rohrleitung angelegt wird. Bei dieser bekannten Rohrbruchschelle sind am in Längsrichtung gespaltenen Gehäuse beidseits des Gehäusespaltes Laschen angebracht, durch die hindurch zylindrische Spannbolzen verlaufen. Letztere werden mit Spiel von Spannschrauben durchsetzt, die eine Mutter tragen, die sich am andern Spannbolzen abstützen. Der verhältnismässig grosse Gehäusespalt wird durch eine Einlage abgedeckt.

Der vorliegenden Erfindung liegt nun die Aufgabe zugrunde, eine Rohrkupplung der eingangs genannten Art zu schaffen, bei der die Spannschraube möglichst frei von unerwünschten und störenden Biegekraft-Einwirkungen ist und bei der die auf das Gehäuse einwirkenden Spannkräfte im wesentlichen nur in Umfangsrichtung des Gehäuses wirken und möglichst nahe am Gehäuse eingeleitet werden können.

Diese Aufgabe wird erfindungsgemäss durch die Merkmale des kennzeichnenden Teils des Anspruches 1 gelöst.

Das Spiel zwischen dem Schaft der Spannschraube und den Spannorganen ermöglicht eine Relativbewegung zwischen letzteren und dem Schraubenschaft quer zur Spannrichtung, d.h. quer zur Schraubenlängsachse. Bei einer solchen Querbewegung, die beim Anziehen der Schraube und dem damit verursachten Zusammenbringen der Spannorgane auftritt, können sich sowohl der Schraubenkopf wie auch die Mutter auf der zugeordneten gewölbten Auflagefläche der im Querschnitt U-förmigen Spannorgane abwälzen. Diese besagte Querbewegung wird somit nicht durch die auf den Spannorganen aufliegenden Teile (Kopf und Mutter) der Spannschraube behindert. Die Spannschraube wird daher beim Spannen im wesentlichen nur auf Zug beansprucht. Das ermöglicht es, die Spannschraube und entsprechend auch die Spannorgane kleiner zu dimensionieren, wodurch Material und Gewicht eingespart werden können.

Die beim Anziehen der Spannschraube im wesentlichen in Richtung deren Längsachse aufgebrachten Spannkräfte werden über die im Querschnitt U-förmigen Spannorgane so auf das Gehäuse übertragen, dass sie im wesentlichen in dessen Umfangsrichtung wirken und nahe am Umfang des Gehäuses eingeleitet werden. Letzteres wird besonders vorteilhaft bei der in den Ansprüchen 2 und 4 umschriebenen Ausführungsform erreicht.

Im folgenden wird anhand der Zeichnung ein Ausführungbeispiel des Erfindungsgegenstandes näher erläutert. Es zeigt rein schematisch:
- Figur 1: eine Rohrkupplung in Vorderansicht,
- Figur 2: eine Ansicht der Kupplung gemäss Fig. 1 in Richtung des Pfeiles A, wobei die untere Kupplungshälfte im Schnitt dargestellt ist,
- Figur 3: in einer der Fig. 1 entsprechenden Darstellung und in gegenüber letzterer vergrössertem Massstab den Bereich des Kupplungsgehäuses mit der Spanneinrichtung in verspanntem Zustand,
- Figur 4: ein Spannorgan in perspektivischer Darstellung.

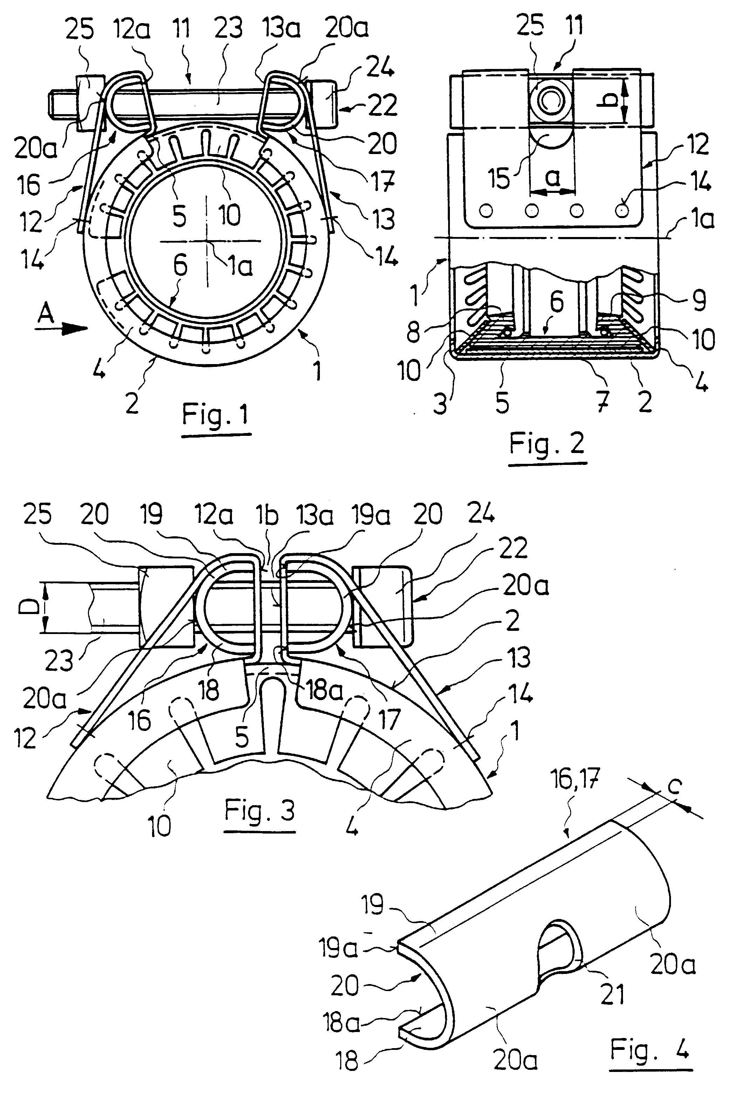

Die in den Figuren 1-3 dargestellte Rohrkupplung weist ein ringförmiges Gehäuse 1 auf, das in Richtung seiner Längsachse la gespaltet ist. Das Gehäuse 1 besitzt einen zylindrischen Mantel 2 und einwärts gebogene Seitenwände 3, 4. Der Gehäusespalt 1b (Fig. 3) ist mittels eines Einlagebleches 5 in an sich bekannter Weise überbrückt.

Das Gehäuse 1 umschliesst eine im Querschnitt etwa C-förmige Dichtungsmanschette 6 aus einem Elastomer, welche von bekannter Bauart ist. Diese Dichtungsmanschette 6 weist einen am Mantel 2 des Gehäuses 1 anliegenden Steg 7 auf, von dem nach innen weisende und sich gegeneinander erstreckende Dichtlippen 8, 9 (Fig. 2) abstehen. Seitlich liegt die Dichtungsmanschette 6 je an einem lamellierten Verankerungsring 10 an, der sich an den Seitenwänden 3, 4 des Gehäuses 1 abstützt.

Das Gehäuse 1 lässt sich mittels einer Spanneinrichtung 11 zusammenziehen, um so dessen Durchmesser zu verkleinern. Diese Spanneinrichtung 11 weist zwei seitlich des Gehäusespaltes 5 angeordnete Spannlaschen 12, 13 auf, welche in der Art von Schlaufen ausgebildet sind. Diese Spannlaschen 12, 13 werden durch einen mit dem Mantel 2 einstückigen und zurückgebogenen Materialabschnitt gebildet, der an seinem Ende an der mit 14 bezeichneten Stelle mit dem Mantel 2 verschweisst ist. Jede Spannlasche 12, 13 weist einen etwa radial verlaufenden, im wesentlichen ebenen Wandabschnitt 12a bzw. 13a auf. Diese beiden Wandabschnitte 12a, 13a liegen sich gegenüber. Jede Spannlasche 12, 13 ist mit einer Durchgangsöffnung 15 versehen, die beim vorliegenden Ausführungsbeispiel in der Art eines Langloches ausgebildet ist (siehe Fig. 2). Jede Spannlasche 12, 13 umschliesst ein im Querschnitt U-förmiges Spannorgan 16 bzw. 17, dessen Schenkel 18, 19 über einen gewölbten Teil 20 miteinander verbunden sind. In den in Fig. 4 mit c bezeichneten Endbereichen sind diese Schenkel 18 und 19 im wesentlich eben. Die Spannorgane 16, 17 liegen mit den Schenkelenden 18a, 19a an den ebenen Wandabschnitten 12a bzw. 13a der Spannorgane 12, 13 auf, wie das aus den Figuren 1 und 3 deutlich hervorgeht. In jedem Spannorgan 16, 17 ist ein Durchgangsloch 21 (Fig. 4) ausgebildet, durch das sich der Schaft 23 einer Spannschraube 22 hindurcherstreckt. Dieses Durchgangsloch 21 ist dabei zumindest in Umfangsrichtung des entsprechenden Spannorganes 16,17 grösser als der Aussendurchmesser D (Fig. 3) des Schraubenschaftes 23. Dies bedeutet, dass der Schraubenschaft 23 diese Durchgangslöcher 21 mit radialem Spiel durchsetzt, so dass eine Relativbewegung zwischen Schraubenschaft 23 und den Spannorganen 16, 17 möglich ist. Der beim vorliegenden Ausführungsbeispiel zylindrische Schraubenkopf 24 liegt auf der gewölbten Aussenfläche 20a des Spannorganes 17 auf, während sich eine auf den Schraubenschaft 23 aufgeschraubte Mutter 25 auf der gewölbten Aussenfläche 20a des gegenüberliegenden Spannorganes 16 abstützt. Wie Fig. 2 zeigt, ist dabei vorzugsweise die Breite a der Durchgangsöffnung 15 etwa gleich der Schlüsselweite b der Mutter 25, so dass die Mutter 25 in der Oeffnung 15 gegen Verdrehung gehalten ist. Das Anziehen der Spannschraube 22 erfolgt mittels eines Werkzeuges, das in einen in den Figuren nicht dargestellten Innensechskant des Schraubenkopfes 24 eingeführt werden kann.

Wie bekannt weist die Dichtungsmanschette 6 gegenüber dem Aussendurchmesser der zu kuppelnden Rohre ein Uebermass auf. Die Kupplung wird im vormontierten Zustand auf die Rohre aufgeschoben und nach dem Verlegen der Rohre über eine Stossfuge geschoben. Durch Drehen der Spannschraube 22 wird das Gehäuse 1 in Umfangsrichtung unter Verkleinerung des Durchmessers zusammengezogen. Dabei wird die Dichtungsmanschette 6, wie bei solchen Rohrkupplungen bekannt, dichtend an die Aussenseite der zu kuppelnden Rohre gepresst.

In Fig. 1 ist die Rohrkupplung in ihrem geöffneten Zustand gezeigt, während die Figur 3 das Kupplungsgehäuse 1 nach beendigter Montage darstellt. Während des Zusammenziehens des Gehäuses 1 werden die Spannorgane 16, 17 aufeinander zu bewegt. Bei dieser Bewegung ändern die Spannorgane 16, 17 ihre Lage bezüglich der Spannschraube 22, wie sich das ohne weiteres aus einem Vergleich der beiden in den Figuren 1 und 3 dargestellten Zustände erkennen lässt. Die dabei auftretende Relativbewegung zwischen den Spannorganen 16, 17 und dem Schraubenschaft 23 wird, wie erwähnt, deswegen nicht behindert, weil der Schraubenschaft 23 mit Spiel durch die Durchgangslöcher 21 der Spannorgane 16, 17 hindurchgeführt ist. Da sich dabei sowohl der Schraubenkopf 24 wie auch die Mutter 25 auf der gekrümmten Aussenfläche 20a der Spannorgane 16, 17 abwälzen können, wird diese Anpassbewegung zwischen Schraubenschaft 23 und Stützorganen 16, 17 nicht beeinträchtigt. Der Schraubenschaft 23 wird im wesentlichen nur auf Zug beansprucht und muss keine oder nur sehr geringe Biegekräfte aufnehmen. Dementsprechend kann der Schraubenschaft 23 auch weniger kräftig bemessen werden.

Die von Schraubenkopf 24 und Mutter 25 auf die zugeordneten Spannorgane 16, 17 ausgeübten Kräfte werden von letzteren auf die ebenen Wandabschnitte 12a, 13a der Spannlaschen 12, 13, die, wie erwähnt etwa radial verlaufen, übertragen. Dadurch wird erreicht, dass die Spannkräfte im wesentlichen in Umfangsrichtung des Gehäuses 1 wirken. Die Einleitung der Spannkräfte kann nahe am Umfang des Gehäuses 1 erfolgen.

Die Breite des Gehäusespaltes 1b im fertigmontierten Zustand der Kupplung kann kleiner gehalten werden als bei bekannten Rohrkupplungen dieser Art. Dies bedeutet, dass das den Gehäusespalt 1b überbrückende Einlageblech 5 entsprechend schwächer dimensioniert werden kann.

Die Spannorgane könnten auch als Teilzylinder mit einer als Stützfläche für den Schraubenkopf 24 bzw. die Mutter 25 dienenden zylindrischen Fläche und einer ebenen Fläche ausgebildet sein, die an den ebenen Flächen 12a, 13a der Spannlaschen 12, 13 anliegt. Es versteht sich, dass auch diese Teilzylinder mit einer Durchgangsöffnung für den Schraubenschaft 23 versehen sein müssten, welche grösser ist als der Aussendurchmesser D des Schraubenschaftes 23. Eine solche Ausführungsform hat jedoch gegenüber der gezeigten Ausbildung der Spannorgane 16, 17 als U-förmig gebogene Elemente den Nachteil, dass der Kraftangriff am Gehäuse 1 weniger günstig ist. Zudem müsste bei als Teil-, vorzugsweise Halbzylindern, ausgebildeten Spannorganen, das Durchgangsloch bei gegebenem Durchmesser D des Schraubenschaftes 23 wesentlich grösser sein als bei im Querschnitt U-förmigen Spannorganen 16, 17, um dasselbe Mass von Relativbeweglichkeit zwischen Schraubenschaft 23 und Spannorganen 16, 17 zu ermöglichen. Durch Vergrösserung der Breite der Schenkelbereiche C kann die Biegesteifigkeit der U-förmigen Spannorgane 16, 17 wesentlich erhöht werden.

## Patentansprüche

1. Rohrkupplung zum Verbinden zweier Rohre mit einer vor der Montage gegenüber dem Aussendurchmesser der zu kuppelnden Rohre Übermass aufweisenden Elastomer-Dichtungsmanschette (6), die von einem ringförmigen und in Richtung der Längsachse (la) gespaltenen Gehäuse (1) umschlossen ist, das zum Anlegen der Dichtungmanschette (6) an die Rohre mittels einer Spanneinrichtung (11) in Umfangsrichtung zusammenziehbar ist, die wenigstens eine im wesentlichen tangential zum Gehäuse (1) verlaufende Spannschraube (22) aufweist, die sich durch zwei je auf einer Seite des Gehäusespaltes (1b) angeordnete Spannorgane (16, 17) hindurch erstreckt, die an eine Durchgangsöffnung (15) für den Schaft (23) der Spannschraube (22) aufweisenden Spannlaschen (11, 12) des Gehäuses (1) angreifen, wobei die Spannschraube (22) mit ihrem Kopf (24) an einer gewölbten Aussenfläche (20a) des einen Spannorganes (17) anliegt, dadurch gekennzeichnet, dass der Schaft (23) der Spannschraube (22) die Spannorgane (16, 17), die im Querschnitt im wesentlichen U-förmig ausgebildet sind und mit ihren Schenkelenden (18a, 19a) an den Spannlaschen (11, 12) angreifen, mit Spiel durchsetzt und eine Mutter (25) trägt, die sich an einer ebenfalls gewölbten Aussenfläche (20a) des anderen Spannorganes (16) abstützt.

2. Rohrkupplung nach Anspruch 1, dadurch gekennzeichnet, dass die Spannorgane (16, 17) wenigstens ein Durchgangsloch (21) aufweisen, dessen Innenabmessung in Umfangsrichtung der Spannorgane (16, 17) grösser ist als der Aussendurchmesser (D) des Spannschraubenschaftes (23).

3. Rohrkupplung nach Anspruch 1 dadurch gekennzeichnet, dass die als Schlaufen ausgebildeten Spannlaschen (12, 13) einen dem Gehäusespalt (1b), zugekehrten Wandabschnitt (12a, 13a) aufweisen, der im wesentlichen eben ist, sich vorzugsweise etwa in radialer Richtung erstreckt und als Auflage für das jeweils zugeordnete Spannorgan (16, 17) dient.

4. Rohrkupplung nach- Anspruch 1, dadurch gekennzeichnet, dass die Breite (a) der Durchgangsöffnung (15) wenigstens einer Spannlasche (12) etwa gleich der Schlüsselweite (b) der Mutter (25) der Spannschraube (22) ist.

5. Rohrkupplung nach Anspruch 1, dadurch gekennzeichnet, dass die Dichtmanschette (6) im Querschnitt etwa C-förmig ausgebildet ist und sich gegeneinander erstreckende Dichtlippen (8, 9) aufweist, die dichtend an jeweils einer der Rohrenden zur Anlage bringbar sind.

## Claims

1. Pipe coupling for connecting two pipes, having an elastomeric sealing sleeve (6) which before assembly has an oversize relative to the outside diameter of the pipes to be coupled and is enclosed by an annular housing (1) which is split in the direction of the longitudinal axis (la) and which, to put the sealing sleeve (6) against the pipes, can be drawn together in the peripheral direction by means of a clamping device (11) which has at least one clamping screw (22) which runs essentially tangentially to the housing (1), extends through two clamping members (16, 17) which are arranged on one side each of the housing gap (1b) and act on clamping brackets (11, 12) of the housing (1), having a through-opening (15) for the shank (23) of the clamping screw (22), the clamping screw (22) bearing with its head (24) against an arched outer surface (20a) of one clamping member (17), characterized in that the shank (23) of the clamping screw (22) passes with clearance through the clamping members (16, 17), which are of essentially U-shaped design in cross-section and act with their leg ends (18a, 19a) on the clamping brackets (11, 12), and carries a nut (25) which is supported on a likewise arched outer surface (20a) of the other clamping member (16).

2. Pipe coupling according to Claim 1, characterized in that the clamping members (16, 17) have at least one through-hole (21) whose inside dimension in the peripheral direction of the clamping members (16, 17) is larger than the outside diameter (D) of the clamping-screw shank (23).

3. Pipe coupling according to Claim 1, characterized in that the clamping brackets (12, 13) designed as loops have a wall section (12a, 13a) which faces the housing gap (1b), is essentially flat, preferably extends approximately in a radial direction and serves as a bearing surface for the respectively allocated clamping member (16, 17).

4. Pipe coupling according to Claim 1, characterized in that the width (a) of the through-opening (15) of at least one clamping bracket (12) is approximately the same as the width (b) across the flats of the nut (25) of the clamping screw (22).

5. Pipe coupling according to Claim 1, characterized in that the sealing sleeve (6) is designed roughly in a C-shape in cross-section and has sealing lips (8, 9) which extend towards one another and can be brought to bear in a sealing manner in each case against one of the pipe ends.

## Revendications

1. Raccord pour assembler deux tuyaux, avec une garniture cylindrique (6) en élastomère présentant avant le montage une surdimension par rapport au diamètre extérieur des tuyaux à accoupler, garniture enveloppée par un corps (1) annulaire fendu dans le sens de l'axe longitudinal (la), qui peut être resserré dans le sens périphérique, pour presser la garniture cylindrique (6) contre les tuyaux, au moyen d'un dispositif de serrage (11) présentant au moins une vis de serrage (22), essentiellement tangentielle par rapport au corps (1) et s'étendant au travers de deux organes de tension (16, 17) disposés de part et d'autre de la fente (1b) du corps, ces organes attaquant des éclisses de fixation (12, 13) du corps (1), dotées d'une ouverture de passage (15) pour la tige (23) de la vis de serrage (22), et la vis de serrage (22) s'appliquant par sa tête (24) sur une surface externe cintrée (20a) de l'un des organes de tension (17), caractérisé en ce que la tige (23) de la vis de serrage (22) traverse avec jeu les organes de tension (16, 17), essentiellement réalisés en U en coupe transversale et attaquant par leurs extrémités de branches (18a, 19a) les éclisses de fixation (12, 13), et supporte un écrou (25) qui s'appuie sur une surface externe (20a), également cintrée, de l'autre organe de tension (16).

2. Raccord de tuyaux suivant la revendication 1, caractérisé en ce que les organes de tension (16, 17) présentent au moins un trou de passage (21) dont la dimension intérieure, dans le sens périphérique des organes de tension (16, 17), est supérieure au diamètre extérieur (D) de la tige (23) de la vis de serrage.

3. Raccord de tuyaux suivant la revendication 1, caractérisé en ce que les éclisses de fixation (12, 13), réalisées sous forme de boucles, présentent une section de paroi (12a, 13a) tournée vers la fente (1b) du corps, cette section étant essentiellement plane, s'étendant de préférence à peu près dans le sens radial, et servant d'appui pour l'organe de tension (16, 17) respectivement associé.

4. Raccord de tuyaux suivant la revendication 1, caractérisé en ce que la largeur (a) de l'ouverture de passage (15) d'une éclisse de fixation (12), au moins, est à peu près égale au surplat (b) de l'écrou (25) de la vis de serrage (22).

5. Raccord de tuyaux suivant la revendication 1, caractérisé en ce que la garniture cylindrique (6) a une section transversale à peu près en C et présente des lèvres d'étanchéité (8, 9) en vis-à-vis, qui peuvent être amenées au contact hermétique de chacune des extrémités de tuyaux.
